# EUROPÄISCHE PATENTSCHRIFT

(11) **EP 4 121 793 B1**
(45) Veröffentlichungstag und Bekanntmachung des Hinweises auf die Patenterteilung: **20.11.2024**
(21) Anmeldenummer: 21712057.5
(22) Anmeldetag: 10.03.2021
(51) Int. Cl.: G01S 7/40, G01S 13/87, G01S 13/931

(54) **ERMITTELN EINER EINBAUKONFIGURATION EINES SENSORS FÜR KRAFTFAHRZEUGE**
DETERMINATION OF A MOUNTING CONFIGURATION OF A SENSOR FOR MOTOR VEHICLES
DÉTERMINATION D'UNE CONFIGURATION DE MONTAGE D'UN CAPTEUR POUR VÉHICULES MOTORISÉS

(30) Priorität: 17.03.2020 DE 102020203392
(43) Veröffentlichungstag der Anmeldung: 25.01.2023
(73) Patentinhaber: Robert Bosch GmbH, 70442 Stuttgart (DE)
(72) Erfinder: HAERDT, Christian, 75015 Bretten (DE)
(86) Internationale Anmeldenummer: PCT/EP2021/055971
(87) Internationale Veröffentlichungsnummer: WO 2021/185637

(56) Entgegenhaltungen:
- DE-A1- 102015 118 085
- DE-A1- 102017 105 305
- DE-B3- 102014 017 917

## Beschreibung

Die Erfindung betrifft einen Sensor für Kraftfahrzeuge, zur Erfassung von Objekten im Verkehrsumfeld eines Kraftfahrzeugs, wobei der Sensor eingerichtet ist zum Ausführen eines Messverfahrens zum Bestimmen einer Fehlausrichtung eines Sensors.

DE 102014017917 B3 beschreibt ein Verfahren zum Konfigurieren wenigstens eines an einer von mehreren Einbaupositionen in einem Kraftfahrzeug verbauten Radarsensors hinsichtlich der Einbauposition, wobei an jeder Einbauposition wenigstens eine einbaupositionsspezifische, von dem verbauten Radarsensor erfassbare Identifikationsstruktur vorgesehen wird, wobei die Konfiguration des Radarsensors in Abhängigkeit von die Identifikationsstruktur beschreibenden Radardaten erfolgt.

DE 102017105305 A1 beschreibt ein Verfahren zum Berechnen der längsseitigen und lateralen Position und des Azimutwinkels eines Objektsensors auf einem Trägerfahrzeug.

DE 102015118085 A1 beschreibt ein Verfahren zum Korrigieren einer fehlerhaften Ausrichtung eines optischen Sensors eines Kraftfahrzeugs.

### Offenbarung der Erfindung

Es ist wünschenswert, wenn zwei oder mehr identische Ortungssensoren in ein Fahrzeug an unterschiedlichen Positionen oder mit unterschiedlichen Einbaukonfigurationen eingebaut werden können. Insbesondere ist es wünschenswert, dass dabei gleichartige Sensoren eingesetzt werden können, also lediglich eine einzige Art eines Bauteils mit einer einzigen Bauteilnummer. Dies vereinfacht das Variantenmanagement, das Ersatzteilmanagement und anderes, verglichen mit dem Vorsehen von unterschiedlichen Bauteilen für jede Einbaukonfiguration. Unterschiedliche Einbaukonfigurationen können beispielsweise, im Falle eines Radarsensors, eine rechte, hintere Ecke für ein Radar mit mittlerer Reichweite und eine linke, hintere Ecke für den anderen Radarsensor mit mittlerer Reichweite sein, um eine Toter-Winkel-Detektionsfunktion auf beiden Seiten des Fahrzeugs zu implementieren.

Aufgabe der Erfindung ist es, das Einrichten eines Sensors für Kraftfahrzeuge für eine tatsächliche Einbaukonfiguration aus mehreren unterschiedlichen Einbaukonfigurationen zu erleichtern, für die der Sensor ausgelegt ist.

Die Aufgabe wird erfindungsgemäß gelöst durch einen Sensor der eingangs genannten Art, der zum Einbau am Kraftfahrzeug in unterschiedlichen Einbaukonfigurationen und zum Betrieb in jeder der unterschiedlichen Einbaukonfigurationen ausgelegt ist, wobei der Sensor zum Ausführen eines Verfahrens zum Bestimmen seiner tatsächlichen Einbaukonfiguration aus den unterschiedlichen Einbaukonfigurationen eingerichtet ist, welches Verfahren umfasst:
Bestimmen einer Fehlausrichtung des Sensors in Bezug auf eine zu prüfende Einbaukonfiguration anhand von Messdaten des Messverfahrens, wobei die Messdaten des Messverfahrens interpretiert werden basierend auf der als zutreffend angenommenen, zu prüfenden Einbaukonfiguration; und
Erkennen der zu prüfenden Einbaukonfiguration als zutreffend oder unzutreffend, basierend auf der bestimmten Fehlausrichtung des Sensors,
wobei zumindest in dem Fall, dass die zu prüfende Einbaukonfiguration als unzutreffend erkannt wird, die Schritte des Bestimmens einer Fehlausrichtung und des Erkennens einer Einbaukonfiguration als zutreffend oder unzutreffend für wenigstens eine weitere von wenigstens zwei zu prüfenden Einbaukonfigurationen durchgeführt werden,
wobei in dem Fall, dass eine zu prüfende Einbaukonfiguration als zutreffend erkannt wird, diese Einbaukonfiguration als die tatsächliche Einbaukonfiguration des Sensors bestimmt wird.

Das Interpretieren der Messdaten des Messverfahrens basierend auf der als zutreffend angenommenen, zu prüfenden Einbaukonfiguration bedeutet, dass die Messdaten des Messverfahrens so interpretiert werden, als wäre der Sensor in einer Einbaukonfiguration am Kraftfahrzeug eingebaut, welche der zu prüfenden Einbaukonfiguration entspricht.

Bei dem Verfahren zum Bestimmen der tatsächlichen Einbaukonfiguration des Sensors macht man sich somit zunutze, dass bei Ausführen des Messverfahrens zum Bestimmen der Fehlausrichtung des Sensors oder bei der Interpretation von Messdaten des Messverfahrens nur dann, wenn die Messdaten unter Annahme der tatsächlich zutreffenden Einbaukonfiguration als zutreffende Einbaukonfiguration interpretiert werden, eine zulässige Fehlausrichtung des Sensors bestimmt werden kann. Ist der Sensor jedoch in einer anderen Einbaukonfiguration am Fahrzeug eingebaut, so wird, da die Messdaten des Messverfahrens unter Annahme einer falschen, unzutreffenden Einbaukonfiguration interpretiert werden, keine im Rahmen des Zulässigen liegende Fehlausrichtung des Sensors bestimmt werden können. Vielmehr wird, je nach Unterschieden zwischen den Einbaukonfigurationen, eine unzulässig hohe Fehlausrichtung des Sensors bestimmt werden, oder es wird eine unzulässige, z.B. nicht quantifizierbare Fehlausrichtung des Sensors bestimmt werden.

Besonders vorteilhaft ist dabei, dass ein ohnehin im Sensor bereits implementiertes Messverfahren zum Bestimmen der Fehlausrichtung des Sensors verwendet werden kann, um zusätzlich zur der Bestimmung der Fehlausrichtung des Sensors für eine zutreffende Einbaukonfiguration auch das Bestimmen der tatsächlichen Einbaukonfiguration aus den unterschiedlichen vorgesehenen Einbaukonfigurationen zu gestatten. Dazu kann einfach das Messverfahren bzw. die Interpretation der Messdaten des Messverfahrens mehrfach für unterschiedliche Einbaukonfigurationen durchgeführt werden. Für jede unzutreffende Einbaukonfiguration wird eine Fehlausrichtung des Sensors außerhalb eines zulässigen Bereichs bestimmt werden, und lediglich für die zutreffende Einbaukonfiguration wird eine zulässige Fehlausrichtung des Sensors bestimmt werden.

Bei dem Bestimmen einer Fehlausrichtung des Sensors werden somit die Messdaten des Messverfahrens unter Annahme der zu prüfenden Einbaukonfiguration interpretiert, um die Fehlausrichtung zu bestimmen. Besonders vorteilhaft ist, dass gleiche Exemplare des Sensors in unterschiedlichen Einbaukonfigurationen eingebaut werden können und anschließend die tatsächliche Einbaukonfiguration jedes der Sensoren bestimmt werden kann.

Der Sensor ist zum Betrieb in jeder der unterschiedlichen Einbaukonfigurationen ausgelegt. Im Sensor können beispielsweise unterschiedliche Funktionen, etwa in Form unterschiedlicher Betriebsverfahren oder Softwareverfahren, und/oder unterschiedliche Parameter-Konfigurationen oder Softwarekonfigurationen zum Betrieb in jeder der unterschiedlichen Einbaukonfigurationen implementiert sein.

Die Fehlausrichtung in Bezug auf eine zu prüfende Einbaukonfiguration kann beispielsweise als Fehlausrichtung in Bezug auf eine der zu prüfenden Einbaukonfigurationen zugeordnete Sollausrichtung bestimmt werden.

In einer oder mehreren Ausführungsformen umfasst das Bestimmen einer Fehlausrichtung des Sensors in Bezug auf eine zu prüfende Einbaukonfiguration ein Durchführen des Messverfahrens basierend auf der als zutreffend angenommenen, zu prüfenden Einbaukonfiguration. In einer oder mehreren anderen Ausführungsformen werden hingegen die Messdaten eines einmal durchgeführten Messverfahrens für wenigstens zwei unterschiedliche der zu prüfenden Einbaukonfigurationen unterschiedlich interpretiert. Es können somit Messdaten des Messverfahrens mehrfach unter Annahme jeweiliger unterschiedlicher zu prüfender Einbaukonfigurationen interpretiert werden.

Vorzugsweise ist der Sensor ein Ortungssensor, d.h. der Sensor ist eingerichtet zur Ortung von Objekten im Verkehrsumfeld des Kraftfahrzeugs.

Vorzugsweise unterscheidet sich die wenigstens eine weitere Einbaukonfiguration der wenigstens zwei zu prüfenden Einbaukonfigurationen von jeder bereits als unzutreffend erkannten Einbaukonfiguration.

Das Bestimmen der tatsächlichen Einbaukonfiguration aus den unterschiedlichen Einbaukonfigurationen kann auch als Ermitteln der tatsächlichen Einbaukonfiguration aus den unterschiedlichen Einbaukonfigurationen bezeichnet werden.

Der Schritt des Bestimmens einer Fehlausrichtung kann beispielsweise für unterschiedliche zu prüfende Einbaukonfigurationen durchgeführt werden, bevor für eine oder mehrere der zu prüfenden Einbaukonfigurationen der Schritt des Erkennens einer zu prüfenden Einbaukonfigurationen als zutreffend oder unzutreffend durchgeführt wird.

Vorteilhafte Ausführungsformen ergeben sich aus den Unteransprüchen.

Vorzugsweise erfolgt bei dem Verfahren zum Bestimmen der tatsächlichen Einbaukonfiguration das Erkennen der zu prüfenden Einbaukonfiguration als zutreffend oder unzutreffend basierend auf der bestimmten Fehlausrichtung des Sensors anhand einer Fallunterscheidung, ob ein Maß einer Fehlausrichtung bestimmt wird, welches innerhalb eines für die betreffende Einbaukonfiguration zulässigen Bereichs einer Fehlausrichtung liegt. Der zulässige Bereich einer Fehlausrichtung kann beispielsweise durch ein zulässiges Höchstmaß einer Fehlausrichtung bestimmt sein. Wird kein innerhalb des zulässigen Bereichs liegendes Maß einer Fehlausrichtung bestimmt, so wird die zu prüfende Einbaukonfiguration als unzutreffend erkannt. Dies ist allgemein der Fall, wenn eine unzulässige Fehlausrichtung bestimmt wird. Dies kann beispielsweise der Fall sein, wenn ein Maß einer Fehlausrichtung bestimmt wird, welches außerhalb des zulässigen Bereichs liegt, oder wenn die Fehlausrichtung nicht quantifizierbar ist. Typischerweise sind die Unterschiede zwischen den unterschiedlichen Einbaukonfigurationen erheblich größer als die jeweiligen Bereiche der zulässigen Fehlausrichtungen eines Sensors in einer Einbaukonfiguration.

Die unterschiedlichen, zu prüfenden Einbaukonfigurationen können sich beispielsweise unterscheiden durch unterschiedliche laterale Positionen am Kraftfahrzeug, welche unterschiedliche, spiegelsymmetrische laterale Positionen am Kraftfahrzeug (z.B. links, rechts) und/oder unterschiedliche laterale Abstände von der zentralen Längsachse des Kraftfahrzeugs (z.B. äußere, innere Positionen) umfassen können, und/oder durch unterschiedliche Orientierungen einer zentralen Achse eines Sensorsichtfelds im Azimut (z.B. Front-, Heck-, Seiten-Ausrichtung).

Im einfachsten Fall können beispielsweise zwei Einbaukonfigurationen entsprechend einer linken Position und einer rechten Position am Kraftfahrzeug unterschieden werden. Es können beispielsweise auch Einbaukonfigurationen mit unterschiedlich Einbaupositionen, umfassend eine vordere Einbauposition und eine hintere Einbauposition am Kraftfahrzeug unterschieden werden. Es können beispielsweise auch Einbaukonfigurationen mit unterschiedlichen Einbaupositionen entsprechend einer äußeren Einbauposition und einer inneren Einbauposition unterschieden werden. Es können beispielsweise auch Einbaukonfigurationen, die Kombinationen der vorgenannten Einbaukonfigurationen entsprechen, unterschieden werden. So kann beispielsweise für Einbaupositionen an einer Fahrzeugfront oder an einem Fahrzeugheck unterschieden werden zwischen einer linken, äußeren Einbaukonfiguration, einer linken, inneren Einbaukonfiguration, einer rechten, inneren Einbaukonfiguration und einer rechten, äußeren Einbaukonfiguration.

Es können Einbaukonfigurationen mit unterschiedlichen Einbaupositionen, entsprechend einer seitlichen Einbauposition und einer front- oder heckseitigen Einbauposition unterschieden werden.

Vorzugsweise umfassen die unterschiedlichen Einbaukonfigurationen Einbaukonfigurationen mit unterschiedlichen, gleichzeitig durch jeweilige Exemplare des Sensors belegbaren Einbaupositionen. So kann in einem Kraftfahrzeug beispielsweise ein Sensor links eingebaut sein und ein gleichartiger Sensor rechts eingebaut sein.

In einer oder mehreren Ausführungsformen umfassen die unterschiedlichen Einbaukonfigurationen Einbaukonfigurationen mit sich unterscheidender Sollausrichtung einer Sensorachse des Sensors. Bei dieser Sensorachse kann es sich insbesondere um eine zentrale Achse eines Sichtfeldes des Sensors handeln, oder um eine quer zu einer zentralen Achse des Sichtfeldes des Sensors liegende Sensorachse, insbesondere eine Hochachse des Sensors. Beispielsweise kann sich die Sollausrichtung um wenigstens 5° unterscheiden, weiter bevorzugt um wenigstens 10°, weiter bevorzugt um wenigstens 90°. Auf diese Weise können beispielsweise Einbaukonfigurationen unterschieden werden, bei denen Sensoren um 180° um eine zentrale Achse eines Sichtfelds des Radarsensors gedreht angeordnet sind.

Bei dem Verfahren zum Bestimmen der tatsächlichen Einbaukonfiguration kann in dem Fall, dass eine zu prüfende Einbaukonfiguration als zutreffend erkannt wird, diese Einbaukonfiguration im nachfolgenden Betrieb des Sensors zugrunde gelegt werden. Beispielsweise kann der Sensor einen Konfigurationsspeicher aufweisen zum Speichern der in dem Verfahren zum Bestimmen der tatsächlichen Einbaukonfiguration als zutreffend erkannten Einbaukonfiguration. Im einfachsten Fall, wenn genau zwei Einbaukonfigurationen unterschieden werden sollen, kann der Konfigurationsspeicher beispielsweise ein Bit zur Beschreibung der Einbaukonfiguration, beispielsweise einer Einbaurichtung, umfassen. Der Konfigurationsspeicher kann beispielsweise eine Kapazität von einem Bit aufweisen.

In einer oder mehreren Ausführungsformen ist der Sensor dazu eingerichtet, eine Kalibrierung des Sensors vorzunehmen anhand der für die als zutreffend erkannte Einbaukonfiguration bestimmten Fehlausrichtung des Sensors. Somit kann der Sensor nach Erkennung der tatsächlichen Einbaukonfiguration auch in an sich bekannter Weise eine Kalibrierung anhand der aufgrund der Messdaten des Messverfahrens bestimmten Fehlausrichtung vornehmen. Eine Kalibrierung kann beispielsweise durch eine Parameteranpassung und/oder rechnerische Kompensation der Fehlausrichtung erfolgen. Eine Kalibrierung kann beispielsweise auch durch eine mechanische Anpassung einer Ausrichtung des Sensors über eine mechanische Kalibrierungseinrichtung des Sensors erfolgen, basierend auf der bestimmten Fehlausrichtung.

In einer oder mehreren Ausführungsformen umfasst das Messverfahren zum Bestimmen einer Fehlausrichtung des Sensors eine Ortungsmessung wenigstens eines Objektes.

In einer oder mehreren Ausführungsformen ist der Sensor ein Radarsensor.

Der Sensor kann jedoch beispielsweise auch ein Sensor sein, welche eine Kamera zur Erfassung des Verkehrsumfelds des Kraftfahrzeugs umfasst.

Die Aufgabe wird weiter gelöst durch ein Verfahren gemäß dem nebengeordnetem Patentanspruch.

Vorzugsweise ist der Sensor dazu eingerichtet, Information über die als zutreffend erkannte Einbaukonfiguration über eine Kommunikationseinheit nach außen auszugeben, beispielsweise an ein externes Steuergerät oder an einen anderen, gleichartigen Sensor. Dies ermöglicht einen Abgleich der in Frage kommenden Einbaukonfigurationen zwischen mehreren Sensoren.

Ausführungsbeispiele der Erfindung werden im folgenden anhand der Zeichnung näher erläutert. Es zeigen:
- Fig. 1: eine schematische Darstellung von zwei Sensoren in einer Einbausituation an einem Kraftfahrzeug;
- Fig. 2: eine schematische Darstellung eines Verfahrens zum Bestimmen einer Einbaukonfiguration eines Sensors;
- Fig. 3: eine Situation mit zwei möglichen Einbaukonfigurationen an derselben Einbauposition; und
- Fig. 4: eine schematische Darstellung eines Verfahrens zum Bestimmen einer Einbaukonfiguration eines Sensors.

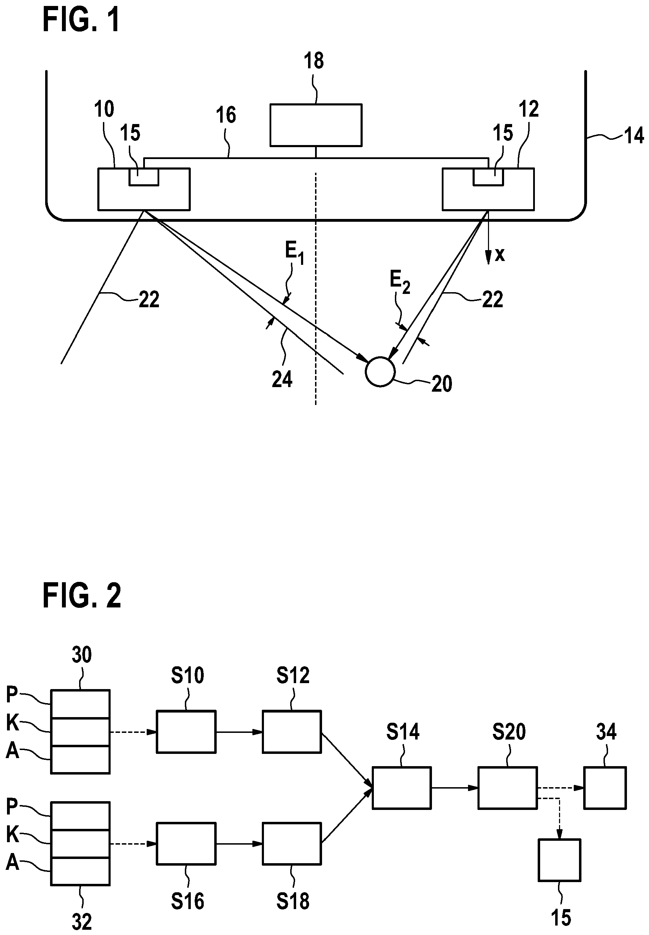

Fig. 1 zeigt schematisch eine Einbausituation zweier gleichartiger Radarsensoren 10, 12 für Kraftfahrzeuge zur Erfassung von Objekten im Verkehrsumfeld eines Kraftfahrzeugs 14. Die Sensoren 10, 12 sind an der Fahrzeugfront angeordnet, mit einer zentralen Achse des Sichtfeldes in Richtung x. Die Radarsensoren 10, 12 haben jeweils eine Kommunikationseinheit 15, über die sie über einen Bus 16 mit einer zentralen Steuereinheit 18 verbunden sind.

Fig. 1 zeigt eine Situation, in der ein Referenzobjekt 20 asymmetrisch bezüglich einer mittleren Ebene zwischen den Radarsensoren 10, 12 angeordnet ist. Die Radarsensoren 10, 12 erfassen das Referenzobjekt 20 daher unter verschiedenen Winkeln und verschiedenen Entfernungen.

Jeder der beiden Radarsensoren 10, 12 führt dann ein Messverfahren zum Bestimmen einer Fehlausrichtung des Sensors durch, bei dem das Referenzobjekt 20 geortet wird und die geortete Relativposition zum Radarsensor 10 bzw. 12 verglichen wird mit einer beispielsweise für den linken Radarsensor 12 vorgesehenen Referenzposition, an der sich das Referenzobjekt 20 befindet. Die Referenzposition ist in Fig. 1 durch die Referenzrichtung 22 gekennzeichnet. Im gezeigten Beispiel bestimmt der Radarsensor 12 beispielsweise den gemessenen Objektwinkel des Referenzobjekts 20, welcher um eine geringfügige Fehlausrichtung E₂ von der Referenzrichtung 22 abweicht, unter Annahme der hier zutreffenden linken Front-Einbauposition für den Radarsensor 12. Der Radarsensor 12 erkennt daher die der linken Front-Einbauposition entsprechende Einbaukonfiguration als zutreffend.

Der rechte Radarsensor 10 stellt beispielweise unter Annahme einer linken Front-Einbauposition als Einbaukonfiguration eine erhebliche Abweichung der Position des Referenzobjekts 20 von der Sollrichtung 22 fest und erkennt daher diese linke Einbaukonfiguration als unzutreffend. Bei einer Prüfung der alternativen Einbaukonfiguration entsprechend der rechten Front-Einbauposition wird eine Referenzrichtung 24 des Referenzobjekts 20 erwartet. Diese wird beispielsweise bis auf eine Fehlausrichtung E₁ von dem Radarsensor 10 erfasst. Der Radarsensor 10 erkennt daraufhin die der rechten Position entsprechende Einbaukonfiguration als zutreffend. Das Verfahren wird weiter unten näher erläutert.

Die in Fig. 1 gezeigte Erkennung der Einbaukonfiguration jedes Radarsensors 10, 12 kann anhand der Bestimmung der jeweiligen Fehlausrichtung E₁, E₂ des Radarsensors im Rahmen einer Referenzobjekt-Messung erfolgen. Wenn nach einer Erstmontage oder Austauschmontage eines Sensors ohnehin eine Kalibrierung zur Bestimmung der Fehlausrichtung des Sensors erfolgt, kann somit die Einbaukonfiguration durch den jeweiligen Sensor automatisch mit erkannt werden.

Es können jedoch auch Messverfahren zum Bestimmen einer Fehlausrichtung eines Sensors 10, 12 im laufenden Betrieb des Sensors genutzt werden, um nach der ersten Inbetriebnahme des Kraftfahrzeugs 14 bzw. nach einem Neueinbau eines Sensors 10 oder 12, die Einbaukonfiguration des jeweiligen Sensors automatisch zu bestimmen. Fehlausrichtungen des Sensors 10, 12 können beispielsweise anhand statistischer Auswertungen von anfangs unbekannten Positionen unterschiedlicher Reflexionen während der Fahrt bestimmt werden.

Fig. 2 zeigt schematisch ein Verfahren zum Bestimmen einer tatsächlichen Einbaukonfiguration eines Sensors, das beispielsweise in dem jeweiligen Sensor 10, 12 der Fig. 1 implementiert sein kann.

Der Sensor 10, 12 ist zum Einbau am Kraftfahrzeug in unterschiedlichen Einbaukonfigurationen und zum Betrieb in jeder der unterschiedlichen Einbaukonfigurationen ausgelegt. Unterschiedliche Einbaukonfigurationen 30, 32 können beispielsweise jeweils eine Nummer der Einbaukonfiguration P, (X, Y, Z)-Koordinaten K sowie einen Montagewinkel A umfassen und werden beispielsweise in einem Schritt S10 zur Durchführung eines Messverfahrens zum Bestimmen einer Fehlausrichtung des Sensors 10, 12 bezüglich der angenommenen Einbaukonfiguration 30 zugrunde gelegt. In einem Schritt S12 wird anhand der erhaltenen Messdaten eine Fehlausrichtung E₁ bzw. E₂ des Sensors 10, 12 in Bezug auf die zu prüfende Einbaukonfiguration 30 bestimmt. Wenn in einem Schritt S14 basierend auf der bestimmten Fehlausrichtung E₁ bzw. E₂ die zu prüfende Einbaukonfiguration 30 als unzutreffend erkannt wird, wird in einem Schritt S16 unter Annahme der weiteren zu prüfenden Einbaukonfiguration 32 erneut das Messverfahren zum Bestimmen der Fehlausrichtung des Sensors 10, 12 unter Zugrundelegung der Einbaukonfiguration 32 ausgeführt. Wiederum wird in einem Schritt S18 die Fehlausrichtung E₁ bzw. E₂ des Sensors 10, 12 bestimmt. Wenn nun in dem Schritt S14 die zweite geprüfte Einbaukonfiguration 32 als zugtreffend erkannt wird, basierend auf der bestimmten Fehlausrichtung des Sensors 10, 12, wird in Schritt S14 diese Einbaukonfiguration 32 als die tatsächliche Einbaukonfiguration des Sensors 10, 12 bestimmt und in Schritt S20 in einen Konfigurationsspeicher 34 des Sensors geschrieben. Dabei kann es beispielsweise genügen, ein Bit zur Unterscheidung der beiden Einbaukonfigurationen 30, 32 (P=0, P=1) anhand einer Einbaurichtung zu speichern. In dem Schritt S20 kann die als zutreffend erkannte Einbaukonfiguration 30, 32 auch beispielsweise über eine Kommunikationseinheit 15 nach außen ausgegeben werden, beispielsweise an ein externes Steuergerät 18 oder an einen anderen, gleichartigen Sensor 10, 12. Die Schritte S16 und S18 können auch vor dem Schritt S14 ausgeführt werden.

Ein solches Verfahren ist nicht auf die Messung eines Referenzobjekts 20 beschränkt, sondern kann beispielsweise auch im laufenden Betrieb eines Kraftfahrzeugs in unbekannten Umgebungen durchgeführt werden.

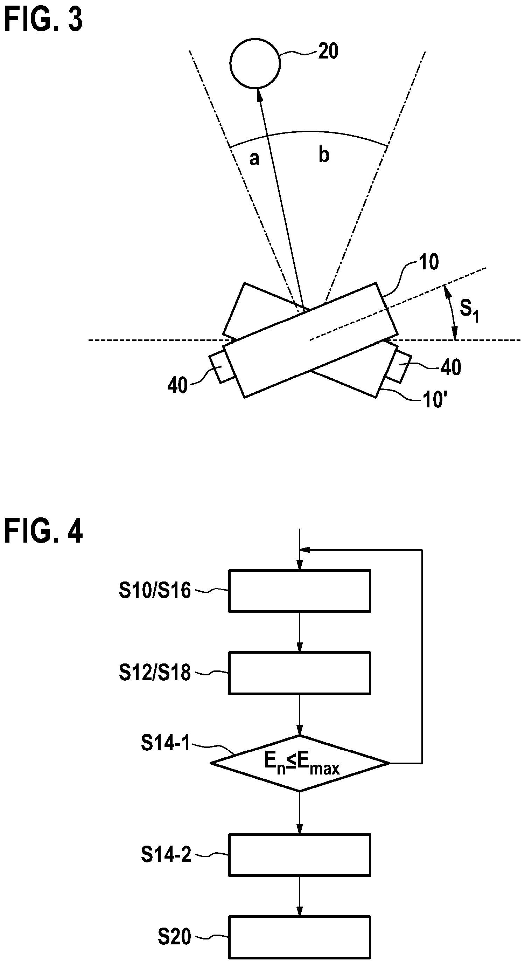

Fig. 3 zeigt eine Situation, bei der ein Radarsensor 10 an einer gleichen Einbauposition in zwei unterschiedlichen Einbaukonfigurationen eingebaut sein kann, die sich durch eine Drehung des Radarsensors 10 um 180° um seine (strichpunktiert dargestellte) zentrale Achse des Sichtfeldes unterscheiden, wobei in Fig. 3 zusätzlich eine Sollausrichtung S₁ bezüglich der Querrichtung des Fahrzeugs dargestellt ist. Der Radarsensor 10 in der Einbaukonfiguration mit nach links weisendem Stecker 40 nimmt das Referenzobjekt 20 unter einem Winkel a wahr, der beispielsweise unter Berücksichtigung der Sollausrichtung S₁ dem Referenzwinkel des Referenzobjekts 20 bis auf eine Fehlausrichtung entspricht. Bei der anderen Einbaukonfiguration entsprechend dem Radarsensor 10' nimmt dieser das Referenzobjekt 20 hingegen unter einem negativen, größeren Winkel b wahr. Wiederum ist, entsprechend dem Verfahren nach

Fig. 2, eine Erkennung der zutreffenden Einbauposition anhand der jeweils bestimmten Fehlausrichtung möglich.

Wenn die in Fig. 3 skizzierten Einbaukonfigurationen solche eines an einer Seite eines Fahrzeugs montierten Radarsensors 10 sind, wird im Betrieb des Radarsensors 10 der Radarsensor 10 eine relative Bewegung von statischen Objekten 20 bei Vorwärtsfahrt typischerweise in einer Richtung erfassen. Wenn beispielsweise der Radarsensor 10 bzw. 10' der Fig. 3 an einer rechten Seite eines Fahrzeugs montiert ist, werden für den Radarsensor 10 in der einen Einbaukonfiguration mit Stecker 40 zur Front gerichtet die statischen Objekte 20 sich "zu der Seite ohne Stecker 40" bewegen, während sich bei der anderen Einbaukonfiguration des Radarsensors 10' die statischen Objekte 20 typischerweise "zu der Seite mit dem Stecker" bewegen. Eine Unterscheidung der Einbaukonfigurationen ist daher ohne weiteres möglich.

In entsprechender Weise kann auch eine Unterscheidung von Einbaukonfigurationen seitlich links und seitlich rechts am Kraftfahrzeug erfolgen, wenn beispielsweise die Seite mit Stecker 40 stets nach vorn gerichtet ist.

Eine Unterscheidung von Einbaukonfigurationen kann beispielsweise bei frontseitig montierten Radarsensoren 10, 12 auch anhand unterschiedlicher Gierraten von bei Kurvenfahrt erfassten Radarobjekten 20 erfolgen.

Fig. 4 veranschaulicht eine Variante des Verfahrens gemäß Fig. 2, bei dem zunächst eine im Schritt S10 bestimmte Fehlausrichtung E₁, E₂ des Sensors 10, 12 in Bezug auf die zu prüfende Einbaukonfiguration 30 bestimmt wird (S12) und dann entschieden wird, ob die zu prüfende Einbaukonfiguration 30 als zutreffend erkannt wird (S14-1). Ist dies nicht der Fall, erfolgt für die nächste zu prüfende Einbaukonfiguration 32 eine Wiederholung der Schritte S10, S12 (entsprechend den Schritten S16, S18). Wird eine zu prüfende Einbaukonfiguration 30, 32 als zutreffend erkannt (S14-1), basierend auf einer Fehlausrichtung, die kleiner oder gleich ist als ein zulässiges Höchstmaß einer Fehlausrichtung (Eₙ≤Eₘₐₓ), dann wird diese Einbaukonfiguration 30, 32 als die tatsächliche Einbaukonfiguration des Sensors 10, 12 bestimmt (S14-2), und es erfolgt die Speicherung und/oder Ausgabe der Einbaukonfiguration in Schritt S20.

## Patentansprüche

1. Sensor (10; 12) für Kraftfahrzeuge, zur Erfassung von Objekten im Verkehrsumfeld eines Kraftfahrzeugs (14),
wobei der Sensor (10; 12) zum Einbau am Kraftfahrzeug (14) in unterschiedlichen Einbaukonfigurationen (30, 32) und zum Betrieb in jeder der unterschiedlichen Einbaukonfigurationen (30, 32) ausgelegt ist,
wobei der Sensor (10; 12) zum Ausführen eines Verfahrens zum Bestimmen seiner tatsächlichen Einbaukonfiguration (30, 32) aus den unterschiedlichen Einbaukonfigurationen (30, 32) eingerichtet ist,
**dadurch gekennzeichnet, dass** der Sensor (10; 12) eingerichtet ist zum Ausführen eines Messverfahrens zum Bestimmen einer Fehlausrichtung des Sensors (10; 12), und dass das Verfahren zum Bestimmen der tatsächlichen Einbaukonfiguration umfasst:
Bestimmen einer Fehlausrichtung (E) des Sensors (10; 12) in Bezug auf eine zu prüfende Einbaukonfiguration (30, 32) anhand von Messdaten des Messverfahrens, wobei die Messdaten des Messverfahrens interpretiert werden basierend auf der als zutreffend angenommenen, zu prüfenden Einbaukonfiguration (30, 32) (S10; S12); und
Erkennen der zu prüfenden Einbaukonfiguration (30, 32) als zutreffend oder unzutreffend, basierend auf der bestimmten Fehlausrichtung (E) des Sensors (10; 12) (S14),
wobei zumindest in dem Fall, dass die zu prüfende Einbaukonfiguration (30) als unzutreffend erkannt wird, die Schritte des Bestimmens einer Fehlausrichtung (E) (S10; S12) und des Erkennens einer Einbaukonfiguration (30, 32) als zutreffend oder unzutreffend (S14) für wenigstens eine weitere von wenigstens zwei zu prüfenden Einbaukonfigurationen (30, 32) durchgeführt werden,
wobei in dem Fall, dass eine zu prüfende Einbaukonfiguration (30, 32) als zutreffend erkannt wird, diese Einbaukonfiguration (30, 32) als die tatsächliche Einbaukonfiguration (30, 32) des Sensors bestimmt wird (S14).

2. Sensor für Kraftfahrzeuge nach Anspruch 1, wobei bei dem Verfahren zum Bestimmen der tatsächlichen Einbaukonfiguration (30, 32) das Erkennen der zu prüfenden Einbaukonfiguration (30, 32) als zutreffend oder unzutreffend basierend auf der bestimmten Fehlausrichtung (E) des Sensors (10; 12) anhand einer Fallunterscheidung erfolgt, ob ein Maß einer Fehlausrichtung (E) bestimmt wird, welches innerhalb eines für die betreffende Einbaukonfiguration zulässigen Bereichs (Eₘₐₓ) einer Fehlausrichtung liegt.

3. Sensor für Kraftfahrzeuge nach einem der vorstehenden Ansprüche, bei dem die unterschiedlichen Einbaukonfigurationen (30, 32) Einbaukonfigurationen mit unterschiedlichen, gleichzeitig durch jeweilige Exemplare des Sensors (10; 12) belegbare Einbaupositionen (30, 32) umfassen.

4. Sensor für Kraftfahrzeuge nach einem der vorstehenden Ansprüche, bei dem die unterschiedlichen Einbaukonfigurationen (30, 32) Einbaukonfigurationen mit sich unterscheidender Sollausrichtung einer Sensorachse des Sensors (10; 12) umfassen.

5. Sensor für Kraftfahrzeuge nach einem der vorstehenden Ansprüche, wobei der Sensor (10; 12) einen Konfigurationsspeicher (34) aufweist zum Speichern der in dem Verfahren zum Bestimmen der tatsächlichen Einbaukonfiguration (30, 32) als zutreffend erkannten Einbaukonfiguration (30, 32).

6. Sensor für Kraftfahrzeuge nach einem der vorstehenden Ansprüche, wobei der Sensor (10; 12) dazu eingerichtet ist, eine Kalibrierung des Sensors (10; 12) vorzunehmen anhand der für die als zutreffend erkannte Einbaukonfiguration (30, 32) bestimmten Fehlausrichtung (E) des Sensors (10; 12).

7. Sensor für Kraftfahrzeuge nach einem der vorstehenden Ansprüche, wobei das Messverfahren zum Bestimmen einer Fehlausrichtung des Sensors (10; 12) eine Ortungsmessung wenigstens eines Objektes (20) umfasst.

8. Sensor für Kraftfahrzeuge nach einem der vorstehenden Ansprüche, wobei der Sensor (10; 12) ein Radarsensor ist.

9. Sensor für Kraftfahrzeuge nach einem der vorstehenden Ansprüche, wobei der Sensor (10; 12) dazu eingerichtet ist, Information über die als zutreffend erkannte Einbaukonfiguration (30, 32) über eine Kommunikationseinheit (15) nach außen auszugeben.

10. Verfahren zum Bestimmen einer tatsächlichen Einbaukonfiguration (30, 32) eines Sensors (10; 12) an einem Kraftfahrzeug (14), wobei der Sensor (10; 12) zum Einbau in unterschiedlichen Einbaukonfigurationen (30, 32) und zum Betrieb in jeder der unterschiedlichen Einbaukonfigurationen (30, 32) ausgelegt ist,
**dadurch gekennzeichnet, dass** der Sensor (10; 12) zum Ausführen eines Messverfahrens zum Bestimmen einer Fehlausrichtung (E) des Sensors (10; 12) eingerichtet ist und dass das Verfahren zum Bestimmen der tatsächlichen Einbaukonfiguration umfasst:
Bestimmen einer Fehlausrichtung (E) des Sensors (10; 12) in Bezug auf eine zu prüfende Einbaukonfiguration (30, 32) anhand von Messdaten des Messverfahrens, wobei die Messdaten des Messverfahrens interpretiert werden basierend auf der als zutreffend angenommenen, zu prüfenden Einbaukonfiguration (30, 32) (S10; S12); und
Erkennen der zu prüfenden Einbaukonfiguration (30, 32) als zutreffend oder unzutreffend, basierend auf der bestimmten Fehlausrichtung (E) des Sensors (10; 12) (S14),
wobei zumindest in dem Fall, dass die zu prüfende Einbaukonfiguration (30, 32) als unzutreffend erkannt wird, die Schritte des Bestimmens einer Fehlausrichtung (E) (S10; S12) und des Erkennens einer Einbaukonfiguration als zutreffend oder unzutreffend (S14) für wenigstens eine weitere von wenigstens zwei zu prüfenden Einbaukonfigurationen (30, 32) durchgeführt werden,
wobei in dem Fall, dass eine zu prüfende Einbaukonfiguration (30, 32) als zutreffend erkannt wird, diese Einbaukonfiguration (30, 32) als die tatsächliche Einbaukonfiguration (30, 32) des Sensors (10; 12) bestimmt wird.

## Claims

1. Sensor (10; 12) for motor vehicles for detecting objects in the traffic environment of a motor vehicle (14),
wherein the sensor (10; 12) is designed to be installed on the motor vehicle (14) in different installation configurations (30, 32) and to be operated in each of the different installation configurations (30, 32),
wherein the sensor (10; 12) is configured to perform a method for determining its actual installation configuration (30, 32) from the different installation configurations (30, 32),
**characterized in that** the sensor (10; 12) is configured to perform a measurement method for determining a misalignment of the sensor (10; 12), and **in that** the method for determining the actual installation configuration comprises:
determining a misalignment (E) of the sensor (10; 12) with respect to an installation configuration (30, 32) to be tested based on measurement data from the measurement method, wherein the measurement data from the measurement method are interpreted based on the installation configuration (30, 32) that is to be tested and is assumed to be correct (S10; S12); and identifying the installation configuration (30, 32) to be tested as correct or incorrect based on the determined misalignment (E) of the sensor (10; 12) (S14),
wherein, at least if the installation configuration (30) to be tested is identified as incorrect, the steps of determining a misalignment (E) (S10; S12) and of identifying an installation configuration (30, 32) as correct or incorrect (S14) are carried out for at least one further one of at least two installation configurations (30, 32) to be tested,
wherein, if an installation configuration (30, 32) to be tested is identified as correct, this installation configuration (30, 32) is determined as the actual installation configuration (30, 32) of the sensor (S14).

2. Sensor for motor vehicles according to Claim 1, wherein, in the method for determining the actual installation configuration (30, 32), the identification of the installation configuration (30, 32) to be tested as correct or incorrect based on the determined misalignment (E) of the sensor (10; 12) is carried out using a case distinction as to whether a measure of misalignment (E) that is within a permissible range (Eₘₐₓ) of misalignment for the relevant installation configuration is determined.

3. Sensor for motor vehicles according to one of the preceding claims, in which the different installation configurations (30, 32) comprise installation configurations with different installation positions (30, 32) which can be occupied simultaneously by respective copies of the sensor (10; 12).

4. Sensor for motor vehicles according to one of the preceding claims, in which the different installation configurations (30, 32) comprise installation configurations with a differing target alignment of a sensor axis of the sensor (10; 12).

5. Sensor for motor vehicles according to one of the preceding claims, wherein the sensor (10; 12) has a configuration memory (34) for storing the installation configuration (30, 32) identified as correct in the method for determining the actual installation configuration (30, 32).

6. Sensor for motor vehicles according to one of the preceding claims, wherein the sensor (10; 12) is configured to calibrate the sensor (10; 12) based on the misalignment (E) of the sensor (10; 12) determined for the installation configuration (30, 32) identified as correct.

7. Sensor for motor vehicles according to one of the preceding claims, wherein the measurement method for determining a misalignment of the sensor (10; 12) comprises a locating measurement of at least one object (20).

8. Sensor for motor vehicles according to one of the preceding claims, wherein the sensor (10; 12) is a radar sensor.

9. Sensor for motor vehicles according to one of the preceding claims, wherein the sensor (10; 12) is configured to output information about the installation configuration (30, 32) identified as correct to the outside via a communication unit (15).

10. Method for determining an actual installation configuration (30, 32) of a sensor (10; 12) on a motor vehicle (14), wherein the sensor (10; 12) is designed to be installed in different installation configurations (30, 32) and to be operated in each of the different installation configurations (30, 32), **characterized in that** the sensor (10; 12) is configured to perform a measurement method for determining a misalignment (E) of the sensor (10; 12), and **in that** the method for determining the actual installation configuration comprises:
determining a misalignment (E) of the sensor (10; 12) with respect to an installation configuration (30, 32) to be tested based on measurement data from the measurement method, wherein the measurement data from the measurement method are interpreted based on the installation configuration (30, 32) that is to be tested and is assumed to be correct (S10; S12); and identifying the installation configuration (30, 32) to be tested as correct or incorrect based on the determined misalignment (E) of the sensor (10; 12) (S14),
wherein, at least if the installation configuration (30, 32) to be tested is identified as incorrect, the steps of determining a misalignment (E) (S10; S12) and of identifying an installation configuration as correct or incorrect (S14) are carried out for at least one further one of at least two installation configurations (30, 32) to be tested,
wherein, if an installation configuration (30, 32) to be tested is identified as correct, this installation configuration (30, 32) is determined as the actual installation configuration (30, 32) of the sensor (10; 12).

## Revendications

1. Capteur (10 ; 12) pour véhicule automobile, permettant de détecter des objets dans l'environnement de circulation d'un véhicule automobile (14),
dans lequel le capteur (10 ; 12) est conçu pour être installé sur le véhicule automobile (14) dans différentes configurations d'installation (30, 32) et pour fonctionner dans chacune des différentes configurations d'installation (30, 32),
dans lequel le capteur (10 ; 12) est aménagé pour exécuter un procédé permettant de déterminer sa configuration d'installation (30, 32) réelle parmi les différents configurations d'installation (30, 32),
**caractérisé en ce que** le capteur (10 ; 12) est aménagé pour exécuter un procédé de mesure permettant de déterminer un désalignement du capteur (10 ; 12), et **en ce que** le procédé permettant de déterminer la configuration d'installation réelle comprend les étapes consistant à :
déterminer un désalignement (E) du capteur (10 ; 12) par rapport à une configuration d'installation (30, 32) à vérifier à l'aide de données de mesure du procédé de mesure, dans lequel les données de mesure du procédé de mesure sont interprétées sur la base de la configuration d'installation (30, 32) considérée comme pertinente (S10 ; S12) ; et
identifier la configuration d'installation (30, 32) à vérifier comme pertinente ou non pertinente, sur la base du désalignement (E) déterminé du capteur (10 ; 12) (S14),
dans lequel au moins dans le cas où la configuration d'installation (30) à vérifier est identifiée comme non pertinente, les étapes de détermination d'un désalignement (E) (S10 ; S12) et d'identification d'une configuration d'installation (30, 32) comme pertinente ou non pertinente (S14) sont exécutées pour au moins une configuration supplémentaire d'au moins deux configurations d'installation (30, 32) à vérifier,
dans lequel dans le cas où une configuration d'installation (30, 32) à vérifier est identifiée comme étant pertinente, cette configuration d'installation (30, 32) est déterminée comme la configuration d'installation (30, 32) réelle du capteur (S14).

2. Capteur pour véhicule automobile selon la revendication 1, dans lequel dans le procédé permettant de déterminer la configuration d'installation (30, 32) réelle, l'identification de la configuration d'installation (30, 32) à vérifier comme pertinente ou non pertinente est effectuée sur la base du désalignement (E) déterminé du capteur (10 ; 12) à l'aide d'une différentiation de cas si un degré d'un désalignement (E) est déterminé qui se trouve à l'intérieur d'une plage (Eₘₐₓ) du désalignement admissible pour la configuration d'installation concernée.

3. Capteur pour véhicule automobile selon l'une quelconque des revendications précédentes, dans lequel les différentes configurations d'installation (30, 32) comprennent des configurations d'installation avec différentes positions d'installation (30, 32) pouvant être occupées en même temps par des exemplaires respectifs du capteur (10 ; 12).

4. Capteur pour véhicule automobile selon l'une quelconque des revendications précédentes, dans lequel les différentes configurations d'installation (30, 32) comprennent des configurations d'installation avec un alignement de consigne différent d'un axe de capteur du capteur (10 ; 12).

5. Capteur pour véhicule automobile selon l'une quelconque des revendications précédentes, dans lequel le capteur (10 ; 12) présente une mémoire de configuration (34) pour stocker la configuration d'installation (30, 32) identifiée comme pertinente dans le procédé permettant de déterminer la configuration d'installation (30, 32) réelle.

6. Capteur pour véhicule automobile selon l'une quelconque des revendications précédentes, dans lequel le capteur (10 ; 12) est aménagé pour procéder à un étalonnage du capteur (10 ; 12) à l'aide du désalignement (E) du capteur (10 ; 12), déterminé pour la configuration d'installation (30, 32) identifiée comme pertinente.

7. Capteur pour véhicule automobile selon l'une quelconque des revendications précédentes, dans lequel le procédé de mesure permettant de déterminer un désalignement du capteur (10 ; 12) comprend une mesure de localisation d'au moins un objet (20).

8. Capteur pour véhicule automobile selon l'une quelconque des revendications précédentes, dans lequel le capteur (10 ; 12) est un capteur radar.

9. Capteur pour véhicule automobile selon l'une quelconque des revendications précédentes, dans lequel le capteur (10 ; 12) est aménagé pour sortir vers l'extérieur des informations concernant la configuration d'installation (30, 32) identifiée comme pertinente, par l'intermédiaire d'une unité de communication (15).

10. Procédé permettant de déterminer une configuration d'installation (30, 32) réelle d'un capteur (10 ; 12) sur un véhicule automobile (14), dans lequel le capteur (10 ; 12) est conçu pour être installé dans différentes configurations d'installation (30, 32) et pour fonctionner dans chacune des différentes configurations d'installation (30, 32),
**caractérisé en ce que** le capteur (10 ; 12) est aménagé pour exécuter un procédé de mesure permettant de déterminer un désalignement (E) du capteur (10 ; 12), et **en ce que** le procédé permettant de déterminer la configuration d'installation réelle comprend les étapes consistant à :
déterminer un désalignement (E) du capteur (10 ; 12) par rapport à une configuration d'installation (30, 32) à vérifier à l'aide de données de mesure du procédé de mesure, dans lequel les données de mesure du procédé de mesure sont interprétées sur la base de la configuration d'installation (30, 32) considérée comme pertinente (S10 ; S12) ; et
identifier la configuration d'installation (30, 32) à vérifier comme pertinente ou non pertinente, sur la base du désalignement (E) déterminé du capteur (10 ; 12) (S14),
dans lequel au moins dans le cas où la configuration d'installation (30, 32) à vérifier est identifiée comme non pertinente, les étapes de détermination d'un désalignement (E) (S10 ; S12) et d'identification d'une configuration d'installation comme pertinente ou non pertinente (S14) sont exécutées pour au moins une configuration supplémentaire d'au moins deux configurations d'installation (30, 32) à vérifier,
dans lequel dans le cas où une configuration d'installation (30, 32) à vérifier est identifiée comme pertinente, cette configuration d'installation (30, 32) est déterminée comme la configuration d'installation (30, 32) réelle du capteur (10 ; 12).
